(19) Europäisches Patentamt
European Patent Office
Office européen des brevets

(11) **EP 3 310 097 A1**

(12) **EUROPEAN PATENT APPLICATION**

(43) Date of publication:
**18.04.2018 Bulletin 2018/16**

(51) Int Cl.:
***H04W 36/24*** *(2009.01)*    *H04W 36/06* *(2009.01)*
***H04W 36/16*** *(2009.01)*    *H04W 76/00* *(2018.01)*

(21) Application number: **16306366.2**

(22) Date of filing: **17.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Alcatel Lucent**
**91620 Nozay (FR)**

(72) Inventor: **VEL, Mohan Kumara**
**560045 Bangalore (IN)**

(74) Representative: **Mouney, Jérôme**
**Alcatel-Lucent International**
**Patent Business**
**Site Nokia Paris Saclay**
**Route de Villejust**
**91620 Nozay (FR)**

(54) **HANDOVER FOR EMERGENCY CALL**

(57)    For allowing a radio frequency band to a user equipment attached to a telecommunication network in a high frequency band, a network entity receives inter frequency measurement results sent from the user equipment, and if said results indicate the result of the subtraction of signal power of a low frequency band from signal power of said high frequency band is below a given threshold, the network entity reconfigures the radio resource control serving frequency to said low frequency band and sends a radio resource control bearer reconfiguration to the user equipment with said low frequency band.

FIG. 2

```
S1  RNC, BS → [inter frequency measurements request] → UE
             │
             ▼
S2  UE → [inter frequency measurements results] → BS, RNC
             │
             ▼
S3  BS, RNC : reconfigure RRC bearer with lower bands
             │
             ▼
S4  RNC, BS → [RRC bearer with lower band] → UE
```

**Description**

FIELD OF THE INVENTION

The present invention generally relates to mobile communication networks and systems. More particularly, the present invention pertains to a system performing inter-frequency measurements for handover for emergency calls.

BACKGROUND

Currently, emergency calls of mobile devices need better network performance for a larger coverage without additional mobility and better indoor performance without additional handover mobility.

Currently, existing methods for emergency call handover don't consider evaluating the inter-frequencies which have the better indoor and coverage performance. The inter-frequencies measurement is triggered only when the serving signal power like a Received Signal Code Power RSCP is below a required threshold.

Existing handover methods consider the evaluation of the active set, defined as the set of base station the mobile device is simultaneously connected to or as the set of cells currently assigning a downlink DPCH (Dedicated Physical Channel) to the mobile device, then a signal power based intra band handover, and then evaluate v based on the compressed mode measurement of Inter band and Inter RAT (Radio Access Technology) opportunity.

A critical emergency service requirement for a mobile device needs to have good indoor coverage and also to have larger coverage area without any additional handover. The current solutions do not evaluate these aspects when the active set or intra-band options are available.

SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for allowing a radio frequency band to a user equipment attached to a telecommunication network in a high frequency band, comprising the following steps performed by a network entity:

    receiving inter frequency measurement results sent from the user equipment,
    if said results indicate the subtraction of signal power of a low frequency band from signal power of said high frequency band is below a given threshold, reconfiguring the radio resource control serving frequency to said low frequency band,

    sending a radio resource control bearer reconfiguration to the user equipment with said low frequency band.

In an embodiment, inter frequency measurement results contain signal power of low frequency bands below or equal to 900MHz.

In an embodiment, said high frequency band is one the high frequency bands above or equal to 1400MHz.

In an embodiment, said threshold is equal to 4 dB.

In an embodiment, the network entity previously sent a request to the user equipment for inter frequency measurements.

In an embodiment, the user equipment performed the inter frequency measurements during a call or before establishment of a call.

In an embodiment, said call is an emergency call or a priority call.

Advantageously, the invention provides a unique approach to improve signal strength and reduce handover possibilities and thus reduce call failure or multiple handovers.

Moreover, when the user equipment switches to the lower band which provides additional free space gain like 4dB, it additionally provides transmission of power of the user equipment reduced by half and thus improves the longevity of battery of the user equipment.

The invention also pertains to a network entity for allowing a radio frequency band to a user equipment attached to a telecommunication network in a high frequency band, the network entity being configured to:

    receive inter frequency measurement results sent from the user equipment,
    if said results indicate the subtraction of signal power of a low frequency band from signal power of said high frequency band is below a given threshold, reconfigure the radio resource control serving frequency to said low frequency band,
    send a radio resource control bearer reconfiguration to the user equipment with said low frequency band.

In an embodiment, the network entity is a base station or a radio network controller.

The invention also pertains to a computer program capable of being implemented within a network entity, said program comprising instructions which, when the program is executed within said network entity, carry out steps according to the method according to the invention.

BRIEF DESCRIPTION OF THE FIGURES

Some embodiments of the present invention are now described, by way of example only, and with reference to the accompanying drawings. The same reference number represents the same element or the same type of element on all drawings.

FIG. 1 is a schematic block diagram of a communication system according to one embodiment of the invention for handover for emergency call.
FIG. 2 is a flow chart illustrating a method for handover for emergency call according to one embodiment of the invention.

The same reference number represents the same element or the same type of element on all drawings.

DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In general, in a mobile system, a terminal (also called User Equipment UE) has access to mobile communication services via a mobile network (also called Public Land Mobile Network PLMN). In general, a mobile network comprises a Core Network (CN) accessed via a Radio Access Network (RAN).

In a radio network e.g. UMTS UTRAN, a service in the cell can be provided on several frequency carriers. These new cells, separated by different frequencies, usually have the same coverage and form a multi layered geographically collocated cell structure. Inter-frequency handovers, i.e. an inter-frequency cell changes are executed for the purpose of balancing the load between frequency carriers and is therefore possible to have a number of users on each frequency carrier. Inter-frequency handovers are controlled by RRC (Radio Resource Control) entities which are located in a Radio Network Controller (RNC).

In intra-frequency handover, the user equipment remains on the same radio channel and merely moves to another cell on the same frequency. An inter-frequency handover is when the user equipment moves to a different radio channel; an operator may have multiple radio channels in their market in order to serve high traffic demands.

During inter-frequency handover the user equipment must be given time to make the necessary measurements on the different carrier frequency.

Compressed mode is needed when making measurements on another frequency (inter-frequency) or on a different radio technology (inter-RAT). In the compressed mode the transmission and reception are stopped for a short time and the measurements are performed on other frequency or RAT in that time. After the time is over, the transmission and the reception resume. To make sure that the data is not lost, the data is compressed in the frame making empty space where measurements can be performed.

More particularly, transmission and reception at the user equipment are halted for short time intervals in order to perform measurements on the other frequencies. In these intervals, gaps within frames received by the user equipment are introduced by the RAN to allow the user equipment to perform the measurements. Transmission gaps are created by compressing the data that should be transmitted in the time domain, i.e. within a time frame.

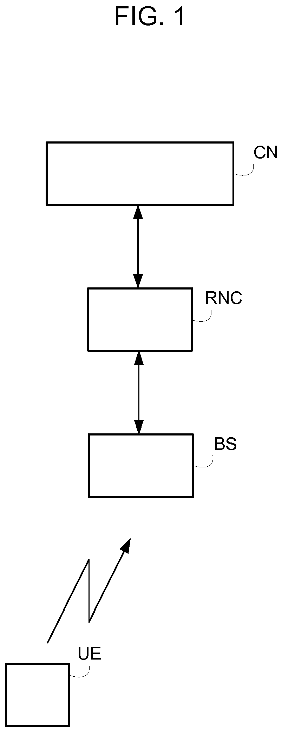

Referring to FIG. 1, a user equipment UE is able to be connected to at least one telecommunication network.

For example, the telecommunication network is a digital cellular radio communication network of the GSM (Global System for Mobile communications) or UMTS (Universal Mobile Telecommunications System) or even CDMA (Code Division Multiple Access) type or even LTE (Long Term Evolution) type or even 5G type.

The user equipment UE can establish a connection with the telecommunication network through a respective radio access network via a radio link with a base station BS. The radio access networks are distributed over a geographical area typically divided into cells that are served by a corresponding base station. Base stations communicate over an air interface with the user equipment, with several base stations being connected to a radio network controller RNC that is connected to one or more core networks.

Emergency call and priority call need a better performance and able to provide larger coverage mobility and better indoor performance without any additional handover.

When the user equipment UE is camped in the higher frequency bands and when it needs to make an emergency call or needs a handover, the user equipment UE is requested to evaluate lower frequency bands, like the 850MHZ cellular band (3G Band V), 800MHZ cellular band (3G Band VI) and 900MHZ cellular band (3G Band VIII). The User equipment is requested for this evaluation even if an active set is available when the system is using any cellular Band I to XXVI in 3GPP excluding the lower bands. The coverage in the lower bands becomes nearly twice the distance without any additional handover and provides better indoor penetration performance.

The better performance provided in lower bands is in the order of 4db (Free space gain) up to 11 dB (indoor penetration), which enhances the coverage.

It is assumed that a high frequency band is one of the frequency bands above or equal to 1400MHz and a low frequency band is one of the frequency bands below or equal to 900MHz.

In other words according to 3GPP TS 25.101 and 3GPP TS 25.102, a high frequency band is one of the bands 5, 6, 8, 12, 13, 14, 19, 20 and 26, and a low frequency band is of the bands 1, 2, 3, 4, 7, 9, 10, 11, 21, 22 and 25.

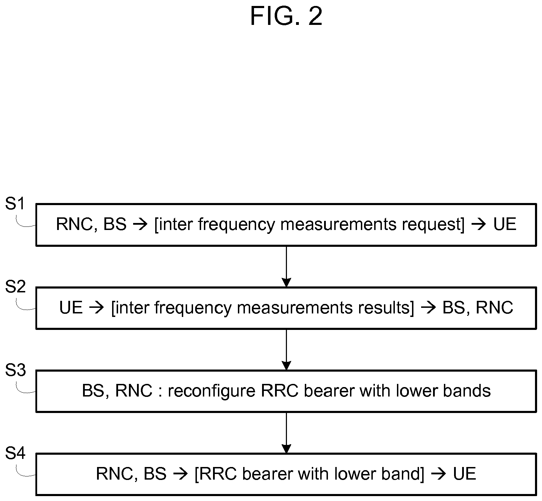

With reference to FIG. 2, a method for handover for emergency call according to one embodiment of the invention comprises steps S1 to S4.

Initially, the user equipment UE selects a cell and performs an initial attach procedure to the core network via a selected base station. According to the type of the telecommunication network, the user equipment may exchange messages with a base station (base station eNobeB like in 4G type network) or with a radio network controller (like in 3G type network).

In step S1, the user equipment initiates a call, like an emergency call or a priority call, and the network entity requests the user equipment for inter frequency evaluation.

For example in UMTS network, the network entity sends a measurement control message with Measurement type set to Inter-Frequency measurements to the user equipment.

More especially, on command from the network entity, the user equipment UE can monitor cells on other frequencies and cells on other modes and radio access technologies that are supported by the user equipment UE. To allow the user equipment UE to perform inter-frequency measurements, the network entity instructs the user equipment UE to enter into "compressed mode" for inter-frequency measurements.

The user equipment is requested for inter-frequency measurements, even if there is an active set or if a neighbor cell presents a good signal power for intra frequency.

In step S2, the user equipment UE performs the inter-frequency measurements in compressed mode, and sends the results of the measurements to the network entity.

The inter-frequency measurement relies on the quantities obtained from observing the common pilot Channel (CPICH). So far, three types of quantities have been defined for the measurement procedure (see, e.g. 3GPP TS 25.215, "Physical Layer - Measurements (FDD)"), and especially the Received Signal Code Power (RSCP), which is the received power on one code after dispreading, defined on the pilot symbols.

It is assumed that inter-frequency measurements are carried out using a signal power received by the user equipment, this signal power being for example Received Signal Code Power or the Reference Signal Received Power over the Reference Signal subcarriers (RSRP), but could be other type of information like the Path Loss.

The inter-frequency measurement in "compressed mode" means that transmission and reception at the user equipment are halted for short time intervals in order to perform measurements on the other frequencies. In these intervals, gaps within time frames received by the user equipment are introduced by the Radio Access Network to allow the user equipment to perform the measurements. Transmission gaps are created by compressing the data that should be transmitted within a time frame.

For example, the results of the measurements contain a signal power value for each available frequency band.

In step S3, the network entity reconfigures Radio Resource Control serving frequency to the one of the low bands, like the 850MHZ cellular band (3G Band V), 800MHZ cellular band (3G Band VI) or 900MHZ cellular band (3G Band VIII), if the measurements indicate a signal power for one of these low bands superior to the current signal power (received via the current frequency band) subtracted by a given threshold. In other words, the reconfiguration occurs when the measurement results indicate the subtraction of signal power of a low frequency band from signal power of said high frequency band is below a given threshold. In one embodiment, the threshold is set at 4 dB.

More especially, the current signal power of higher band signal is evaluated and compared only with the signal power of signal of any of the available lower bands (inter frequency measurement), the signal power of other higher bands being ignored. The user equipment UE gets an additional advantage of free space gain of 4 dB or more in the low frequency bands (900MHz and below) than the high frequency bands (1400MHz and above). So, whether the user equipment can be serviced with the same carrier (current high frequency band) or switch to low frequency band is evaluated by assessing if signal power in a lower frequency band is less or equal than 4db to the current signal power in high frequency band to continue to serve with the same carrier of high band or otherwise handover to carrier of lower band.

In step S4, the network entity sends a Radio Resource Control bearer reconfiguration to the user equipment, with the selected low frequency bands, in order to establish the call.

For example, the Free Space Path Loss FSPL can be calculated as follows : FSPL = 20 log (d) + 20 log (f) + X, where X is a constant value, d is the distance between the transmitter and the receiver and f is the frequency.

In case of frequency f1 of 1400MHz band with distance d:

$$ FSPL(f1) = X + 20 \log (d) + 20 \log (1400) $$

$$ FSPL(f1) \approx X + 20 \log (d) + 63 $$

In case of frequency f2 of 900MHz band with same distance d:

$$FSPL(f2) = X + 20 \log (d) + 20 \log (900)$$

$$FSPL(f2) \approx X + 20 \log (d) + 59$$

$$FSPL(f2) \approx FSPL(f1) - 4$$

Thus, by using lower band (at most 900 MHz), there is a reduction of free space loss of nearly 4 dB than an actual higher band (at least 1400MHz). So a switch from higher frequency to lower frequency provides additional gain of at least 4dB for a same distance.

In indoor situation, assuming the user equipment is located in a structure with wall constituted of 4cm of thick brick and of 12cm of air gap followed by 4cm of brick, then attenuation for 1400 MHz band could be estimated of 8 to 10 dB higher than attenuation for 900 MHz attenuation.

The same principles apply for a handover with an ongoing call of the user equipment, like an emergency call or a priority call.

Also, the user equipment can periodically evaluate the signal condition and whenever is met the criteria according to which the signal power of lower band more 4dB is above the signal power of the current higher band, the user equipment can switch to the lower band.

The invention described here relates to a method and a network entity identifying for allowing a radio frequency band to a user equipment. According to one implementation of the invention, steps of the invention are determined by the instructions of a computer program incorporated into a network entity. The program comprises program instructions which, when said program is loaded and executed within the network entity, carry out the steps of the method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the method according to the invention.

**Claims**

1. A method for allowing a radio frequency band to a user equipment attached to a telecommunication network in a high frequency band, comprising the following steps performed by a network entity (BS; RNC):

   receiving (S2) inter frequency measurement results sent from the user equipment,
   if said results indicate the subtraction of signal power of a low frequency band from signal power of said high frequency band is below a given threshold, reconfiguring (S3) the radio resource control serving frequency to said low frequency band,
   sending (S4) a radio resource control bearer reconfiguration to the user equipment with said low frequency band.

2. A method according to claim 1, wherein inter frequency measurement results contain signal power of low frequency bands below or equal to 900MHz.

3. A method according to claim 2, wherein said high frequency band is one the high frequency bands above or equal to 1400MHz.

4. A method according to any of claims 1 to 3, wherein said threshold is equal to 6 dB.

5. A method according to any of claims 1 to 4, wherein the network entity previously sent a request to the user equipment for inter frequency measurements.

6. A method according to any of claims 1 to 5, wherein the user equipment performed the inter frequency measurements during a call or before establishment of a call.

7. A method according to claim 6, wherein said call is an emergency call or a priority call.

8. A network entity (BS; RNC) for allowing a radio frequency band to a user equipment attached to a telecommunication network in a high frequency band, the network entity being configured to:

   receive inter frequency measurement results sent from the user equipment,
   if said results indicate the subtraction of signal power of a low frequency band from signal power of said high frequency band is below a given threshold, reconfigure the radio resource control serving frequency to said low frequency band,
   send a radio resource control bearer reconfiguration to the user equipment with said low frequency band.

9. A network entity (BS; RNC) according to claim 8, being a base station or a radio network controller.

10. A computer program capable of being implemented within a network entity (BS; RNC) for allowing a radio frequency band to a user equipment attached to a telecommunication network in a high frequency band, said program comprising instructions which, when the program is loaded and executed within said network entity, implement a method as claimed in any of claims 1 to 7.

# FIG. 1

CN

RNC

BS

UE

# FIG. 2

S1 RNC, BS → [inter frequency measurements request] → UE

S2 UE → [inter frequency measurements results] → BS, RNC

S3 BS, RNC : reconfigure RRC bearer with lower bands

S4 RNC, BS → [RRC bearer with lower band] → UE

Europäisches
Patentamt

European
Patent Office

Office européen
des brevets

**EUROPEAN SEARCH REPORT**

Application Number

EP 16 30 6366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2010/107782 A2 (NORTEL NETWORKS LTD [CA]; JANG KE-CHI [US]; SONG YI [US]; LI JUN [US]) 23 September 2010 (2010-09-23) * paragraph [0014] - paragraph [0031]; figures 1,2 * * paragraph [0033] - paragraph [0042]; figures 4,5 * ----- | 1-10 | INV. H04W36/24 ADD. H04W36/06 H04W36/16 H04W76/00 |
| Y | WO 98/48575 A2 (ERICSSON GE MOBILE INC [US]) 29 October 1998 (1998-10-29) * page 8, line 26 - page 10, line 10 * * page 13, line 17 - page 15, line 11 * ----- | 1-10 | |
| A | US 2015/063315 A1 (YANG MING [US] ET AL) 5 March 2015 (2015-03-05) * paragraph [0033] - paragraph [0042]; figure 4 * ----- | 1-10 | |
| A | US 2015/296356 A1 (RAMAMOORTHY SHRINATH [IN] ET AL) 15 October 2015 (2015-10-15) * paragraph [0024] - paragraph [0035]; figure 4 * ----- | 1-10 | |
| A | US 8 903 413 B2 (JI TINGFANG [US] ET AL) 2 December 2014 (2014-12-02) * column 10, lines 4-47 * ----- | 1-10 | TECHNICAL FIELDS SEARCHED (IPC) H04W |

The present search report has been drawn up for all claims

| Place of search | Date of completion of the search | Examiner |
|---|---|---|
| Munich | 10 March 2017 | Vadursi, Michele |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 16 30 6366

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2017

| Patent document cited in search report | | Publication date | Patent family member(s) | | Publication date |
|---|---|---|---|---|---|
| WO 2010107782 | A2 | 23-09-2010 | BR | PI1012346 A2 | 22-03-2016 |
| | | | CA | 2755670 A1 | 23-09-2010 |
| | | | CN | 102334350 A | 25-01-2012 |
| | | | EP | 2409502 A2 | 25-01-2012 |
| | | | JP | 5616954 B2 | 29-10-2014 |
| | | | JP | 2012521167 A | 10-09-2012 |
| | | | JP | 2014233090 A | 11-12-2014 |
| | | | KR | 20110126123 A | 22-11-2011 |
| | | | RU | 2011132491 A | 27-04-2013 |
| | | | US | 2011274012 A1 | 10-11-2011 |
| | | | WO | 2010107782 A2 | 23-09-2010 |
| WO 9848575 | A2 | 29-10-1998 | AU | 741279 B2 | 29-11-2001 |
| | | | BR | 9809297 A | 04-07-2000 |
| | | | CA | 2287890 A1 | 29-10-1998 |
| | | | CN | 1261509 A | 26-07-2000 |
| | | | DE | 19882332 B3 | 01-03-2012 |
| | | | DE | 19882332 T1 | 03-08-2000 |
| | | | GB | 2341516 A | 15-03-2000 |
| | | | US | 6115596 A | 05-09-2000 |
| | | | WO | 9848575 A2 | 29-10-1998 |
| US 2015063315 | A1 | 05-03-2015 | US | 2015063315 A1 | 05-03-2015 |
| | | | WO | 2015030992 A1 | 05-03-2015 |
| US 2015296356 | A1 | 15-10-2015 | NONE | | |
| US 8903413 | B2 | 02-12-2014 | CN | 102356665 A | 15-02-2012 |
| | | | CN | 103813401 A | 21-05-2014 |
| | | | EP | 2409522 A2 | 25-01-2012 |
| | | | JP | 5329710 B2 | 30-10-2013 |
| | | | JP | 2012521674 A | 13-09-2012 |
| | | | KR | 20110135868 A | 19-12-2011 |
| | | | KR | 20130100378 A | 10-09-2013 |
| | | | TW | 201127101 A | 01-08-2011 |
| | | | US | 2010240373 A1 | 23-09-2010 |
| | | | WO | 2010108129 A2 | 23-09-2010 |

EPO FORM P0459

For more details about this annex : see Official Journal of the European Patent Office, No. 12/82